# EUROPÄISCHE PATENTSCHRIFT

(11) **EP 3 181 222 B1**
(45) Veröffentlichungstag und Bekanntmachung des Hinweises auf die Patenterteilung: **26.12.2018**
(21) Anmeldenummer: 16201326.2
(22) Anmeldetag: 30.11.2016
(51) Int. Cl.: B01J 20/20, B01D 39/02, B01D 39/20

(54) **IMPRÄGNIERTES FILTERMATERIAL UND HERSTELLUNGSVERFAHREN**
IMPREGNATED FILTER MATERIAL AND METHOD OF MAKING IT
MATÉRIAU FILTRANT IMPRÉGNÉ ET PROCÉDÉ DE FABRICATION

(30) Priorität: 30.11.2015 CH 17482015
(43) Veröffentlichungstag der Anmeldung: 21.06.2017
(73) Patentinhaber: Dr. P. Pleisch AG, 8344 Bäretswil (CH)
(72) Erfinder: BISCHOF, Rolf, 8335 Hittnau (CH); VENETZ, Frédéric, 8342 Wernetshausen (CH)
(74) Vertreter: Frei Patent Attorneys

(56) Entgegenhaltungen:
- WO-A1-01/30491
- WO-A1-93/10896
- CH-A5- 695 186
- DE-T2- 69 005 374
- DE-U1-202011 106 028
- DE-U1-202014 101 137

## Beschreibung

Die Erfindung bezieht sich auf das Gebiet der Luftreinigung. Sie bezieht sich auf ein imprägniertes Filtermaterial sowie ein Verfahren zur Herstellung eines imprägnierten Filtermaterials gemäss dem Oberbegriff der entsprechenden unabhängigen Patentansprüche. Das Filtermaterial gemäss Erfindung ist insbesondere geeignet für die Adsorption von Schad- und/oder Giftstoffen aus Atemluft, also für die Anwendung beispielsweise in Schutzmasken für persönliche Schutzausrüstung oder in Filtern von Lüftungsanlagen im Bereich des Kollektivschutzes.

Gemäss dem Stand der Technik wird Aktivkohle oder ein anderes Trägermaterial mit einer grossen Oberfläche pro Gewichtseinheit verwendet, um Trägermaterialien für beispielsweise Schutzmaskenfilter herzustellen. Das Trägermaterial wird zu diesem Zwecke üblicherweise mit Metallen, beispielsweise in Form von Metalloxiden, Carbonaten oder Chloriden und gegebenenfalls mit zusätzlichen organischen Stoffen imprägniert, wodurch es eine erhöhte, gegebenenfalls spezifische Adsorptionsfähigkeit erhält, die mindestens teilweise darauf beruht, dass die Metalle chemische Umwandlungen der Schadstoffe katalysieren oder die Chemisorption des Trägermaterials verändern bzw. verbessert. Ein derartig imprägniertes Trägermaterial, insbesondere eine derart imprägnierte Aktivkohle eignet sich beispielsweise zur Entfernung von Schadstoffen wie Chlor, Chlorwasserstoff, Cyanwasserstoff, Schwefelwasserstoff, Tetrachlorkohlenstoff, Ammoniak etc. aus der Atemluft.

Im zweiten Weltkrieg wurden in Schutzmaskenfiltern Trägermaterialien auf Aktivkohlebasis verwendet, wobei die Aktivkohle mit Kupfer, Silber und Chrom imprägniert war und dadurch insbesondere eine gute Wirksamkeit gegen Cyanwasserstoff, cyanogene Verbindungen und Arsine aufwiesen. Da Chrom⁺⁶ aber wegen seiner karzinogenen Eigenschaften und wegen seiner Wasserlöslichkeit aus ökologischen Gründen wenig erwünscht ist, wurde später und bis heute noch versucht, Chrom⁺⁶ in den Imprägnierungsmitteln zu ersetzten.

DE 20 2011 106028 U1 offenbart ein Filtermaterial, insbesondere zum Einsatz in oder als Filter zur Gasbehandlung und/oder Gasreinigung, insbesondere für Reinraumbedingungen, wobei das Filtermaterial mindestens eine Aktivkohle umfasst, wobei die Aktivkohle mit mindestens einer Metallkomponente ausgerüstet ist, wobei die Metallkomponente mindestens eine metallhaltige, insbesondere Metallionen, vorzugsweise auf Basis einer Metallverbindung, enthaltende Ionische Flüssigkeit (IL) umfasst. Die Aktivkohle ist mit der Metallkomponente derart ausgerüstet, dass eine Imprägnierung der Aktivkohle mit der metallhaltigen Ionischen Flüssigkeit (IL) vorliegt. Die Metallkomponente und/oder die Ionische Flüssigkeit (IL) weist ein organisches oder anorganisches Metallsalz auf, wobei das Salz ausgewählt ist aus der Gruppe von Halogenidsalzen, Sulfaten, Sulfiden, Sulfiten, Nitraten, Nitriten, Phosphaten, Phosphiden, Phosphiten, Carbamaten, Alkohalaten und Carbonsäuresalzen, insbesondere Halogenidsalzen und Carbonsäuresalzen.

Gemäss US4801311 (Westvaco Corp.) wird anstelle von Chrom ein Vanadat oder Molybdat für die Imprägnierung von Aktivkohle verwendet, wobei die Aktivkohle zusätzlich Triethylendiamin und gegebenenfalls Tartarsäure enthält. Gemäss EP0450414 (Drägerwerk) wird eine chromfreie Aktivkohle hergestellt durch Imprägnierung der Aktivkohle mit Kupfer und Zink sowie Wolframat oder Molybdat und gegebenenfalls Vanadat. Gemäss EP0614400 (Calgon Carbon Corp.) wird eine chromfreie Aktivkohle hergestellt durch Imprägnierung der Aktivkohle mit Kupfer oder Zink sowie Molybdat. Gemäss den genannten Publikationen ist der Effekt der chromfreien Aktivkohlen so gut wie derjenige von mit Chrom imprägnierten Aktivkohlen, insbesondere betreffend Adsorption von Cyanwasserstoff und von cyanogenen Verbindungen und betreffend Lagerfähigkeit.

Es ist deshalb Aufgabe der Erfindung, ein chromfreies Filtermaterial im Bereich der Atemluftaufbereitung für Schutzmasken, Fahrzeug- und Kollektivfilter jeglicher Art und ein Verfahren zur Herstellung eines Filtermaterials sowie einen Filter und eine Schutzmaske zu schaffen, welches sich für die Adsorption von Schad- und/oder Giftstoffen aus der Atemluft eignet, insbesondere von Schad- und/oder Giftstoffen wie Chlor, Chlorwasserstoff, Cyanwasserstoff, Chlorcyan, Schwefelwasserstoff, Schwefeldioxid, Formaldehyd, Ammoniak, Merkaptane, Brom, Fluorwasserstoff, Bromwasserstoff, Methylamin, andere Amine, Phosgen, Phosphortrichlorid, Phosphin, Sickstoffdioxid, Sarin, Arsin, Chlorpikrin, Dimethylmethylphosphonat

(DMMP), Quecksilberdämpfe und/oder organische Dämpfe wie Cyclohexan und/oder Tetrachlorkohlenstoff.

Das erfindungsgemässe Filtermaterial soll gängigen Qualitätsanforderungen genügen und soll insbesondere eine gegenüber bekannten Filtermaterialien mit Chrom, ein mindestens gleich gutes Adsorptionsspektrum bezüglich Schad- und/oder Giftstoffen und ein mindestens gleich gutes Alterungsverhalten aufweisen.

Diese Aufgabe löst ein Verfahren zur Herstellung eines imprägnierten Filtermaterials und ein imprägniertes Filtermaterial mit den Merkmalen der entsprechenden unabhängigen Patentansprüche.

Das Verfahren zur Herstellung eines imprägnierten Filtermaterials weist folgende Schritte auf:
- Bereitstellen mindestens einer Imprägnierlösung, wobei die Imprägnierlösung oder die Imprägnierlösungen im Fall mehrere Imprägnierschritte mindestens Phosphat, Sulfat, Molybdän, Zink und Kupfer aufweisen;
- Bereitstellen eines Filtermaterials,wobei das Filtermaterial Aktivkohle ist und
- mindestens einmalige Imprägnierung des Filtermaterials mit mindestens einer Imprägnierlösung.

Auf diese Weise wird es möglich ein imprägniertes Filtermaterial für die Entfernung von Schad- und/oder Giftstoffen aus Atemluft herzustellen, welches Sulfat und Phosphat aufweist. Die Schad- und/oder Giftstoffe können dabei in Form vom Gasen und/oder Dämpfen vorliegen.

Bei der Imprägnierung wird das Filtermaterial in der Imprägnierlösung getränkt bzw. das Filtermaterial wird von der Imprägnierlösung benetzt.

Durch eine mehrmalige Imprägnierung kann die Imprägnierbeladung erhöht bzw. eingestellt und eine gleichmässige Beladung des Filtermaterials erzielt werden. Es ist auch möglich, dass für die verschiedenen Imprägnierschritte unterschiedliche Imprägnierlösungen verwendet werden. Dadurch können in mehreren Imprägnierschritten unterschiedliche oder gleiche Imprägnierlösungen aufgebracht werden. Es ist möglich einmal, zweimal, dreimal, viermal oder mehrmals zu imprägnieren.

Die Imprägnierlösung kann eine wässrige Imprägnierlösung sein.

Das Verfahren zur Herstellung des imprägnierten Filtermaterials kann die folgenden Schritte aufweisen:
- Bereitstellen einer Zinkchloridlösung, insbesondere einer wässrigen Zinkchloridlösung;
- imprägnieren des Filtermaterials mit der Zinkchloridlösung.

Dadurch kann die Alterungsbeständigkeit des Filtermaterials, insbesondere des feuchten Filtermaterials, verbessert werden.

Das Filtermaterial kann nach einer und/oder jeder Imprägnierung getrocknet werden. Das Trocknen kann durch Erhitzen des Filtermaterials erfolgen. Dabei sollte die Temperatur beim Trocknen nicht auf die Entzündtemperatur der getrockneten Aktivkohle, ansteigen. Dadurch kann das Filtermaterial effektiv getrocknet werden. Beim Trocknen kann es zu einer Umwandlung von Imprägnierchemikalien auf dem Filtermaterial kommen.

Das Filtermaterial ist ein poröses Material. Auf der Oberfläche des porösen Filtermaterials können verschiedene Verbindungen angelagert werden, die die Imprägnierung bilden. Das imprägnierte, poröse Filtermaterial kann die Schad- und/oder Giftstoffe absorbieren, wobei die Imprägnierung die Kapazität bzw. die Haltezeit für verschiedene Gase und/oder Dämpfe verbessert (im Vergleich zum unimprägnierten Filtermaterial). Das Filtermaterial ist eine Aktivkohle, insbesondere eine aus Kokosnussschale hergestellte Aktivkohle. Die Aktivkohle kann durch Behandlung in einem Drehrohrofen oder im Wirbelschichtverfahren mit Wasserdampf aktiviert werden. Aktivkohle ist ein poröser Kohlenstoff mit einer grossen inneren Oberfläche, die für die Absorption der Schad- und/oder Giftstoffe geeignet ist. Das Filtermaterial kann als wasseraktivierte Aktivkohle ausgebildet sein. Das Filtermaterial kann auch als aktivierte Formkohle ausgebildet sein.

Mindestens eine Imprägnierlösung kann mindestens eine, insbesondere mindestens drei, der folgenden Imprägnierchemikalien aufweisen:
- Schwefelsäure,
- Phosphorsäure,
- Wasser;
- Kupfersalz, insbesondere Kupferkarbonat, Kupferhydroxid, Kupfernitrat;
- Zinksalz, insbesondere Zinkkarbonat, Zinkhydroxid;
- wässrige Ammoniaklösung (Ammoniak);
- Triethylendiamin (TEDA);
- Silbersalz, wie beispielsweise Silbernitrat;
- Ammoniumsalz, insbesondere Ammoniumcarbonat, Ammoniumsulfat und/oder Ammoniumphosphat;
- Halogenat, insbesondere Jodat, Bromat und/oder Chlorat, insbesondere Kaliumjodat, Natriumjodat, Kaliumbromat, Natriumbromat, Kaliumchlorat, Natriumchlorat;
- Molybdänsalz, insbesondere Ammoniumheptamolybdat;
- Sulfat, insbesondere Ammoniumsulfat; und/oder
- Phosphat, insbesondere Ammoniumphosphat.

Die Imprägnierlösung kann mindestens drei der folgenden Imprägnierchemikalien: Wasser, Ammoniak, Nitrat, insbesondere Silbernitrat, Kupfersalz, insbesondere Kupfercarbonat, Ammoniumcarbonat, Molybdänsalz, insbesondere Ammoniumhetamolybdat, Halogenat, insbesondere Jodat, insbesondere Kaliumiodat, Zinksalz, insbesondere Zinkhydroxid, Sulfat, insbesondere Ammoniumsulfat, Phosphat, insbesondere Ammoniumphosphat, und/oder Triethylendiamin (TEDA) aufweisen

Ammoniak dient als Lösungsmittel für Metallverbindungen in der Imprägnierlösung. Dadurch wird das Filtermaterial bereits bei der Imprägnierung mit Ammoniak getränkt. Ammoniak wird während dem Trocknen des Filtermaterials ausgetrieben, wobei bis zu 0.4% Ammoniak auf dem Filtermaterial gebunden bleibt. Der gebundene Ammoniak kann in Form von Ammoniumkarbonat und/oder Ammoniummolybdat auf dem Filtermaterial vorliegen. Der gebundene Ammoniak kann während dem Gebrauch des Filtermaterials beispielsweis in einer Schutzmaske, Fahrzeugfilter und/oder Kollektivfilter durch Wärme und Luftfeuchte als Ammoniak desorbieren.

Das imprägnierte Filtermaterial für die Entfernung von Schad- und/oder Giftstoffen aus Atemluft weist Sulfat, Phosphat, Molybdän,Kupfer und Zink auf. Es konnte erstaunlicher Weise festgestellt werden, dass mit Hilfe eines solchen imprägnierten Filtermaterials die Desorption von Ammoniak minimiert bzw. reduziert werden kann. Der Ammoniak bleibt nach der Imprägnierung des Filtermaterials weitgehend auf dem Filtermaterial gebunden. Dadurch können während eines Gebrauchs des Filtermaterials die Ammoniak-Arbeitsplatzkonzentrationswerte von 14 mg/m³ nach TRGS 900 vom 09.11.2015 eingehalten werden.

Das Filtermaterial weist Zink und/oder Molybdän, insbesondere Zinksulfat und/oder Zinkphosphat auf. Ein solches Filtermaterial kann eine Desorption von Ammoniak beim Gebrauch des Filtermaterials unterbinden bzw. verringern.

Das Filtermaterial kann chromfrei, nickelfrei, vanadiumfrei und/oder kobaltfrei sein. Auf diese Weise kann das Vorkommen von karziogenen und/oder toxischen Verbindungen auf dem Filtermaterial reduziert werden.

Das imprägnierte Filtermaterial weist Molybdän, Kupfer und Zink auf.

Wie bereits beschrieben, ist das Filtermaterial durch das beschriebene Verfahren herstellbar.

Das Filtermaterial kann Zinksulfat, insbesondere 1-25 Gew.% Zinksulfat, insbesondere 1-15 Gew.% Zinksulfat, insbesondere 1-12 Gew.% Zinksulfat, Zinkphosphat, insbesondere 0.5-3.5 Gew.% Zinkphosphat, Molybdat, insbesondere 0.5-5 Gew.% Ammoniumheptamolybdat, Zinkhydroxid, insbesondere 1-15 Gew.% Zinkhydroxid, und/oder Zinkkarbonat, insbesondere 1-15 Gew.% Zinkkarbonat, aufweisen.

Des Weiteren kann das Filtermaterial Silber, insbesondere 0.02-2 Gew.% Silberoxid, Triethylendiamin (TEDA), insbesondere 0.1-2 Gew.% TEDA, Halogenat, insbesondere Iodat, Bromat und/oder Chlorat, insbesondere 0.5-4 Gew.% Halogenat, insbesondere 0.5-4 Gew.% Kaliumiodat, insbesondere 0.5-2 Gew.% Kaliumiodat, und/oder Kupfer, insbesondere 0.5-10 Gew.% Kupferoxid, insbesondere 0.5-6 Gew.% Kupferoxid, aufweisen.

Gew.% beziehen sich auf die Gesamtmasse des Filtermaterials und ist ein Massenanteil einer spezifischen Komponente an der Gesamtmasse.

Ein Filter bzw. Atemluftfilter zur Entfernen von Schad- und/oder Giftstoffen aus Atemluft kann ein solches erfindungsgemässes Filtermaterial aufweisen. Ein solcher Filter kann in vielen Bereichen in der Industrie und auch zu militärischen Zwecken (ABC-Schutzfilter) eingesetzt werden.

Eine Atemschutzmaske und/oder eine Atemluftschutzeinrichtung kann einen solchen Filter aufweisen. Das Filtermaterial kann dabei in einer Kartusche der Atemschutzmaske und/oder Atemluftschutzeinrichtung angeordnet werden.

Die Atemschutzmaske, die Atemluftschutzeinrichtung, das Filtermaterial bzw. der Filter kann zum Schutz gegen Schad- und/oder Giftstoffe wie Chlor, Chlorwasserstoff, Blausäure, Chlorcyan, Schwefeldioxid, Schwefelwasserstoff, Formaldehyd, Ammoniak, Merkaptane, Brom, Fluorwasserstoff Bromwasserstoff, Methylamin, andere Amine, Arsin, Phosphortrichlorid, Phosphin, Stickoxide, Phosgen, Sarin, Chlorpikrin, Dimethylmethylphosphonat (DMMP), Quecksilberdämpfe und/oder organische Dämpfe wie Cyclohexan und/oder Tetrachlorkohlenstoff und/oder andere Schad- und/oder Giftstoffe eingesetzt werden.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Gemäss einer Ausführungsform weist das Filtermaterial, welches als Aktivkohle ausgebildet ist, folgende Verbindungen auf:

| | |
|---|---|
| Zinksulfat (ZnSO₄) | 1-25 Gew.% |
| Zinkphosphat (Zn₃(PO₄)₂) | 0.5-3.5 Gew.% |
| Ammoniumheptamolybdat ((NH₄)₆Mo₇O₂₄x4 H₂O) | 0.5-5 Gew.% |
| Kupferoxid (CuO) | 0.5-8 Gew.% |
| Zinkkarbonat (ZnCO₃) | 1-15 Gew.% |
| Zinkhydroxid (ZnOH) | 1-15 Gew.% |
| Silberoxid (Ag₂O) | 0.02-2 Gew.% |
| Kaliumiodat (KIO₃) | 1-4 Gew.% |
| Triethylendiamin (TEDA) | 0.1-2 Gew.% |

Ein solches Filtermaterial erfüllt sowohl reine Militärnormen wie auch Industrienormen. Mit Hilfe von Modifikation der Imprägnierlösung und/oder der Imprägnierchemikalien kann das imprägnierte Filtermaterial auch Kombinationen von (Militär-) ABC- und Industriestandards erfüllen.

Beim Trocknen des imprägnierten Filtermaterials bei hohen Temperaturen kann es zu einer Umwandlung von Verbindungen auf dem Filtermaterial kommen. Beispielsweise kann Zinkhydroxid zu Zinkoxid bei Temperaturen über 400°C umgewandelt werden.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: NH3-Desorption nach schweizer Pflichtenheft für ABC-Schutzfilter TPH-07 für Filtermaterial mit mesh size 14x30;
- Figur 2: NH3-Desorption nach schweizer Pflichtenheft für ABC-Schutzfilter TPH-07 für Filtermaterial mit mesh size 7x16; und
- Figur 3: eine Prüfapparatur für das Prüfen von Filtermaterial.

Grundsätzlich sind in den Figuren gleiche Teile mit gleichen Bezugszeichen versehen.

In einem Leistungsvergleich von seit längerem im Handel erhältlichen Produkten der Firma Dr.P.Pleisch AG, nämlich der chromhaltigen Aktivkohle PLW K und der chromfreien Aktivkohle PL MC C (ähnlich wie in EP 1877338 beschrieben), mit dem erfindungsgemässen Produkt, auch als PL MC C_CBRN gekennzeichnet, können die folgenden Ergebnisse in verschiedenen Test erzielt werden.

### begünstigte CICN-Umsetzung durch Phosphate

Ein wichtiger Kampfstoff ist das Chlorcyan (ClCN), welcher von dem Filtermaterial adsorbiert werden muss. In den meisten ABC-Schutzfilterspezifikationen werden lange Haltezeiten gegen diesen Kampfstoff gefordert. Wie aus der Tabelle 1 ersichtlich ist, hilft gerade das Phosphat die Chlorcyanalterung der Aktivkohle zu verhindern respektive zu minimieren. Für den Chlorcyanalterungstest wurden zwei erfindungsgemässe PL MC C_CBRN imprägnierten Filtermaterialien mit variablen Imprägnierungen (siehe Tabelle 1) die folgenden Testbedingungen verwendet:

### Vorkonditionierung der Probe:

Vor der Prüfung wird das imprägnierte Filtermaterial in einem Prüfrohr bei einem Luftstrom von 5.9 cm/s, 80 % ± 2% rel.Feuchte und 22 ± 1°C bis zum Gleichgewicht vorbefeuchtet. Danach wird die Aktivkohle im offenen Prüfrohr 7 Tage lang bei 46°C gelagert. Anschliessend wird die Aktivkohle wieder bei einem Luftstrom von 5.9 cm/s, 80 % ± 2% rel.Feuchte und 22 ± 1°C bis zum Gleichgewicht vorbefeuchtet und geprüft.

### Prüfbedingungen des Chlorcyan Test:

Ein 20 mm Aktivkohlebett wird mittels snow-storm-filling in ein Prüfrohr von 50 mm Durchmesser eingefüllt. Die Chlorcyanprüfkonzentration liegt bei 4000 mg/m³ in einem Luftstrom von 6.95 L/min (Lineargeschwindigkeit 5.9 cm/s). Die rel. Feuchte des Luftstromes ist 80 ± 2% und die Lufttemperatur beträgt 24 ± 3°C. Es wird solange geprüft bis der Durchbruch von 2.5 mg/m³ erreicht ist.

Die Anwesenheit von Phosphaten auf dem imprägnierten Filtermaterial begünstigt die Umsetzung von Chlorcyan auf befeuchtetem Filtermaterial nach einer Thermobelastung oder bei langen Standzeiten >100 Tage. Das imprägnierte Filtermaterial erfährt eine geringere Alterung gegen Chlorcyan. Dadurch können ABC-Schutzfilter wie sie z.B. in Israel zum Bevölkerungsschutz eingesetzt werden, effektiver und effizienter eingesetzt und hergestellt werden.

**Tabelle 1: Cyanalterung der PL MC C:CBRN mit unterschiedlicher Zusammensetzung.**

| AK-Typ | Theoretischer-Gehalt [%] | | | | | | | ClCN_{aged} Haltezeit [min] |
|---|---|---|---|---|---|---|---|---|
| | Zn [%] | Cu [%] | Mo [%] | KIO₃ [%] | Zn [%] | SO₄²⁻ [%] | PO₄³⁻ [%] | |
| **PL MC C_CBRN 1** | **8.3** | **>0.5** | **>0.5** | **2.1** | **1.5** | **1.3** | **0.4** | **31** |
| **PL MC C_CBRN 2** | **8.3** | **>0.5** | **>0.5** | **2.1** | **1.5** | **1.3** | **0.6** | **42** |

### Vergleichsergebnisse

Im Gegensatz zum Filtermaterial Typ PL MC C weisst das erfindungsgemässe imprägnierte Filtermaterial PL MC C_CBRN gleiche bzw. ähnliche Eigenschaften auf wie der chromhaltige Typ PLW K. Im Folgenden werden verschiedene Testergebnisse für verschiedene Testbedingungen verglichen.

### ABC-Schutzfilterprüfnorm

### Vorkonditionierung der Probe "inital" und aged:

Vor der Prüfung werden 160 ± 2 mL Filtermaterial in einem Prüfrohr mit 100 mm Durchmesser bei einem Luftstrom von 30 L/min, 80 % ± 2 % rel.Feuchte und 23 ± 1°C während 48h befeuchtet. Danach wird das imprägnierte Filtermaterial für den "initial"-Test verwendet. Im Gegensatz dazu wird für den "aged"-Test das imprägnierte Filtermaterial zusätzlich im geschlossenen Prüfrohr während 96h bei 50°C gelagert und anschliessend für den "aged"-Test verwendet.

Prüfbedingungen:

Das vorkonditionierte, imprägnierte Filtermaterial wird nun einzeln gegen Chlorcyan, Blausäure und Chlorpikrin geprüft. Die Prüfkonzentrationen der einzelnen Prüfstoffe liegen bei 2000 mg/m³ Prüfluft. Der Prüfluftstrom liegt bei 30 L/min (Kontaktzeit 0.32s). Die rel. Feuchte des Luftstromes ist 80 % ± 2% und die Lufttemperatur beträgt 23 ± 1°C. Es wird solange geprüft bis der Durchbruch von 5 mg/m³ erreicht ist. Die entsprechenden Ergebnisse sind in Tabelle 2 zusammengefasst.

**Tabelle 2: Haltezeiten von PLW K, PL MC C und PL MC C_CBRN für verschiedene ABC-Schutzfilterprüfstoffe in einem Initialtest und einem Alterungstest.**

| Prüfgas | PLW K | PL MC C | PL MC C_CBRN | Anforderung in min |
|---|---|---|---|---|
| Chlopikrin-Haltezeit initial | 96 min | 18.8 min | 77.3 min | 60 |
| Chlorpikrin-Haltezeit aged | 91 min | n.b. | 70.7 min | 50 |
| Chlorcyan-Haltezeit initial | 115 min | 29 min | 95 min | 60 |
| Chlorcyan-Haltezeit aged | 75 min | 43 min | 66.3 min | 40 |
| Blausäure-Haltezeit initial | 82.3*/100** min | 51** min (kein Dicyan) | 59*/62.3** min | 50*/50** |
| Blausäure Haltezeit aged | 48.7*/>56** min | 50** min (kein Dicyan) | 44.7*/45.7** min | 35*/35** |

| | | | | |
|---|---|---|---|---|
| *Dicyandurchbruch **Blausäuredurchbruch | | | | |

Wie aus der Tabelle 2 ersichtlich ist, erfüllt das Produkt PL MC C (chromfreies Filtermaterial), die Anforderungen nicht. Jedoch wird das erfindungsgemässe, imprägnierte Filtermaterial den Anforderungen gerecht.

### ABC-Schutzfilterprüfnorm kombiniert mit der Norm für Industriefilter (EN14387)

Für einen Filter, der bis anhin mit einer chromhaltigen Aktivkohle (PLW K) befüllt wurde, muss eine chromfreie Aktivkohle entwickelt werden und soll das chromhaltige Filtermaterial ersetzen. Dabei soll der Filter die ABC-Schutzfilternorm und die EN14387 Klasse 2 erfüllen. EN14387 ist ein europäischer Standard für die Prüfung von Industrie-Personenschutzfiltermaterialen. Für ein solches Filtermaterial kann nur die in folgende beschriebene Imprägnierung verwendet werden: zusätzlich Zinkchlorid (ZnCl₂) im Bereich von 8-12%(W/W) mit Wasser angefeuchtet, bis der Wassergehalt zwischen 8-12% liegt, wie in Tabelle 3 dargestellt. Im Folgenden werden drei Filtermaterialen miteinander verglichen.

**Tabelle 3: Zusätzliche Imprägnierungskomponeneten für verschiedene imprägnierte Filtermaterialien.**

| Filtermaterial | Zinkchloridgehalt [%] | Wassergehalt [%] |
|---|---|---|
| PLW K -ZnCl₂ | 8.5 | 10.0 |
| PL MC C_CBRN -ZnCl₂ | 8.5 | 10.0 |
| PL MC C -ZnCl₂ | 8.5 | 10.0 |

### Prüfung nach ABC-Schutzfilterprüfnorm wie folgt durchgeführt:

### Vorkonditionierung der Probe "inital":

Vor der Prüfung werden 400 ± 5 mL des imprägnierten Filtermaterials in einem Prüfrohr mit 100 mm Durchmesser bei einem Luftstrom von 30 L/min, 90 % ± 2 % rel.Feuchte und 18 ± 1 °C während 48h befeuchtet. Danach wird die Aktivkohle für den "initial"-Test verwendet. Im Gegensatz dazu wird für den "aged"-Test das imprägnierte Filtermaterial zusätzlich im geschlossenen Prüfrohr während 96h bei 50°C gelagert und anschliessend für den "aged"-Test verwendet.

### Prüfbedingungen:

Das vorkonditionierte, imprägnierte Filtermaterial wird nun, ähnlich wie beim oben beschriebenen zinkchloridfreien Filtermaterial, einzeln gegen Chlorcyan, Blausäure und Chlorpikrin geprüft. Die Prüfkonzentrationen der einzelnen Prüfstoffe liegen bei 2000 mg/m³ Prüfluft. Der Prüfluftstrom liegt bei 30 L/min (Kontaktzeit 0.8 s). Die rel. Feuchte des Luftstromes ist 90 % ± 1% und die Lufttemperatur beträgt 18 ± 1°C. Es wird solange geprüft bis der Durchbruch von 5 mg/m³ erreicht ist.

Wie aus der Tabelle 4 ersichtlich ist, weisst das Filtermaterial PL MC C_CBRN - ZnCl₂ eine geringere Alterung bei HCN auf, wie das ursprüngliche chromhaltige Filtermaterial PLW K -ZnCl₂.

**Tabelle 4: Haltezeiten von PLW K -ZnCl₂, und PL MC C_CBRN -ZnCl₂ für verschiedene ABC-Schutzfilterprüfstoffe in einem Initialtest und einem Alterungstest.**

| Prüfgas | PLW K -ZnCl₂ | PL MC C_CBRN -ZnCl₂ | Anforderung in min |
|---|---|---|---|
| Chlopikrin-Haltezeit initial | >120 min | 220 min | 60 |
| Chlorpikrin-Haltezeit aged | >120 min | 245 min | 50 |
| Chlorcyan-Haltezeit initial | >120 min | 217 min | 60 |
| Chlorcyan-Haltezeit aged | >120 min | 152 min | 40 |
| Blausäure-Haltezeit initial | >120*/>120** min | 132*/148** min | 60*/60** |
| Blausäure-Haltezeit aged | 83*/131** min | 110*/145** min | 50*/50** |

| | | | |
|---|---|---|---|
| *Dicyandurchbruch **Blausäuredurchbruch | | | |

### Prüfung nach EN14387

Filtermaterialien des Typs PL MC C, die mit Zinkchlorid imprägniert und auf einen Wassergehalt von 8-12% (W/W) angefeuchtet wurden, weisen bei Prüfstoffen wie SO₂ und H₂S nach einer Thermobelastung eine wesentliche Alterung auf. Deshalb werden die beiden chromfreien Typen PL MC C und PL MC C_CBRN untereinander verglichen. Um die Alterung zu simulieren werden die Proben wie folgt konditioniert.

### Vorkonditionierung der Probe "aged":

Vor der Prüfung werden 1000 mL imprägnierten Filtermaterialien in ein Glasgefäss gegeben und danach verschlossen während 10 Tagen bei 100°C gelagert. Anschliessend wird das Filtermaterial auf Raumtemperatur abgekühlt und für den "aged"-Test verwendet.

### Prüfbedingungen:

Die vorkonditionierten Filtermaterialen werden mittels snow-storm-filling in ein Prüfrohr mit 60 mm Durchmesser eingefüllt. Die Aktivkohleschicht beträgt 32 mm. Die elaborierten, vorkonditionierten Filtermaterialien werden nun einzeln gegen SO₂ und H₂S geprüft. Die Prüfkonzentrationen der einzelnen Prüfstoffe in der Prüfluft liegen bei 5000 ppm. Der Prüfluftstrom liegt bei 9.8 L/min (Kontaktzeit 0.56 s). Die rel. Feuchte des Luftstromes ist 70 % ± 5% und die Lufttemperatur beträgt 21 ± 4°C. Es wird solange geprüft bis der Durchbruch von 5 ppm für SO₂ bzw. 10 ppm für H₂S erreicht ist.

Wie aus der Tabelle 5 ersichtlich ist, weisst das imprägnierte Filtermaterial PL MC C_CBRN -ZnCl₂ eine geringere Alterung auf, wie die chromfreie Aktivkohle PL MC C -ZnCl₂. Somit konnte auch hier eine Verbesserung gegenüber dem Stand der Technik erzielt werden.

**Tabelle 5: Haltezeiten von PL MC C_CBRN -ZnCl₂ und PL MC C -ZnCl₂ für SO₂ und H₂S.**

| AK Typ | SO₂-Haltezeit nach Alterung [%] | H2S-Haltezeit nach Alterung [%] |
|---|---|---|
| PL MC C_CBRN -ZnCl₂ | 93 | 82.9 |
| PL MC C -ZnCl₂ | 78.9 | 57.1 |

### Schweizer Pflichtenheft für ABC-Schutzfilter TPH-07

Das Filtermaterial aus dem Stand der Technik PL MC C weist bei hohen Kontaktzeiten und hohen Prüfkonzentrationen sehr gute Gashaltezeiten. Das neue erfindungsgemässe Filtermaterial ist auch bei hohen Kontaktzeiten einsetzbar. Die entsprechenden Ergebnisse sind in Tabelle 6 zusammengefasst.

### Vorkonditionierung der Probe (F) und (FAN):

Vor der Prüfung werden 152 -0/+2 mm imprägniertes Filtermaterial in einem Prüfrohr mit 60 mm Durchmesser bei einem Luftstrom von 16.3 ± 1.63 L/min, 90 % -0/+5% rel. Feuchte und 20 ± 0.5°C während 60h befeuchtet. Danach wird die Aktivkohle für den (F)-Test verwendet. Im Gegensatz dazu wird für den (FAN)-Test das imprägnierte Filtermaterial zusätzlich im geschlossenen Prüfrohr während 100 Tagen bei 20°C gelagert und anschliessend für den (FAN)-Test verwendet.

**Tabelle 6: Haltezeiten von PLW K, PL MC C und PL MC C_CBRN für verschiedene ABC-Schutzfilterprüfstoffe in einem (F)-Test und einem (FAN)-Test.**

| Prüfgas | PLW K | PL MC C | PL MC C_CBRN | Anforderung |
|---|---|---|---|---|
| Chlopikrin-Haltezeit (F) | >160 min | >170 min | *215 min | >50 min |
| Chlorpikrin-Haltezeit (FAN) | >140 min | >190 min | 67 min | >50 min |
| Chlorcyan-Haltezeit (F) | >180 min | >180 min | *220min | >80 min |
| Chlorcyan-Haltezeit (FAN) | >140 min | >180 min | 203 min | >80 min |
| Blausäure-Haltezeit (F) | >120*/>120** min | >120** min | 113*/>113** min | >80*/>80** min |
| Blausäure-Haltezeit (FAN) | >80*/>80** min | >110** min | 87*/>87** min | >80*/>80** min |

| | | | | |
|---|---|---|---|---|
| *Dicyandurchbruch **Blausäuredurchbruch | | | | |

### Prüfbedingungen:

Die konditionierten Filtermaterialen (Aktivkohlen) werden nun einzeln gegen Chlorcyan, Blausäure und Chlorpikrin geprüft. Die Prüfkonzentrationen von Blausäure und Chlorcyan liegen bei 5 g/m3 Prüfluft und die Prüfkonzentration von Chlorpikrin liegt bei 16 g/m3. Der Prüfluftstrom liegt bei 16.3 ± 1.63 L/min (Kontaktzeit 1.58s). Die rel. Feuchte des Luftstromes ist 80 % ± 2% und die Lufttemperatur beträgt 23 ± 1°C. Es wird solange geprüft bis der Durchbruch von 5 mg/m3 erreicht ist.

### Gashaltezeiten gegen Phosphin und Stickstoffdioxid (NIOSH-CBRN Bedingungen)

Die Filtermaterialien werden wie angeliefert geprüft. Die Filtermaterialen werden daher nicht spezifisch vorkonditioniert.

### Prüfbedingungen:

Das imprägnierte Filtermaterial wird in ein Prüfrohr mit einem 60 mm Durchmesser mittels snow-storm-filling eingefüllt. Die Prüfschichthöhe beträgt 32 ± 1mm. Das imprägnierte Filtermaterial wird gegen Phosphin und Stickstoffdioxid geprüft. Die Prüfkonzentrationen der einzelnen Prüfstoffe liegen für Phosphin bei 300 ppm und für Stickstoffdioxid bei 200 ppm. Der Prüfluftstrom liegt bei 20.9 ± 1.5L/min (Kontaktzeit 0.26s). Die rel. Feuchte des Luftstromes beträgt 25 % ± 5% und die Lufttemperatur beträgt 20 ± 5 °C. Es wird solange geprüft bis der Durchbruch von 0.3 ppm bei Phosphin und 25 ppm bei Stickstoffmonoxid oder 1 ppm Stickstoffdioxid (Stickstoffdioxid wird auf der Aktivkohle zu Stickstoffmonoxid umgewandelt) erreicht ist. Die entsprechenden Testergebnisse sind in Tabelle 7 zusammengefasst.

**Tabelle 7: Durchbruchzeiten von Phosphin und Stickstofdioxid für PLW K, PL MC C und PL MC C_CBRN.**

| Prüfgas | PLW K | PL MC C | PL MC C_CBRN | Anforderung |
|---|---|---|---|---|
| Phosphin | >47.4 min | 5.1 min | >40.5 min | Min. 15 min |
| Stickstoffdioxid | 25.4 min | 5.0 min | 18.4 min | Min. 15 min |

Da chormhaltige Filtermaterialien beispielsweise in den USA verboten sind und das chromfreie Filtermaterial PL MC C, die Normen nicht erfüllt, kann nur das erfindungsgemäss imprägnierte Filtermaterial eingesetzt werden.

### Gashaltezeiten gegen Chlorgas

Auch für diesen Test werden die Filtermaterialien wie angeliefert geprüft. Die Filtermaterialen werden daher nicht spezifisch vorkonditioniert.

### Prüfbedingungen:

Die Aktivkohlen werden in ein Prüfrohr mit einem 60 mm Durchmesser mittels snow-storm-filling eingefüllt. Die Prüfschichthöhe beträgt 32 ± 1mm. Die Aktivkohlen werden gegen Chlor geprüft. Die Prüfkonzentration liegt bei 1000 ppm. Der Prüfluftstrom liegt bei 9.8 ± 0.5L/min (Kontaktzeit 0.554s). Die rel. Feuchte des Luftstromes beträgt 70 % ± 5% und die Lufttemperatur beträgt 20 ± 5 °C. Es wird solange geprüft bis der Durchbruch von 0.5 ppm Chlor bzw 1.0 ppm Formaldehyd (Chlor reagiert mit TEDA (Tetraethylendiamin) auf dem Filtermaterial zu giftigem Formaldehyd) erreicht ist. Die entsprechenden Testergebnisse sind in Tabelle 8 zusammengefasst.

**Tabelle 8: Durchbruchzeiten von Chlor für PLW K, PL MC C und PL MC C_CBRN.**

| Prüfgas | PLW K | PL MC C | PL MC C_CBRN |
|---|---|---|---|
| Chlor | **>90 min | *<10 min | *>40 min |

| | | | |
|---|---|---|---|
| *Dicyandurchbruch **Blausäuredurchbruch | | | |

Filtermaterialien die mit TEDA imprägniert sind und dem Typ PL MC C entsprechen, weisen gerade mal ¼ und weniger der Chlorgasleistung, im Vergleich zu den erfindungsgemässen, imprägnierten Filtermaterialen, auf. Möglichst lange Chlorgashaltezeiten sind jedoch sehr wichtig, da gerade Chlorgas häufig als Giftgas verwendet wird.

### NH3-Desorption (nach schweizerischem Pflichtenheft für ABC-Schutzfilternorm TPH-07)

Auch für diesen Test werden die Filtermaterialien wie angeliefert geprüft. Die Filtermaterialen werden daher nicht spezifisch vorkonditioniert.

### Prüfbedingungen für 14x30 mesh size:

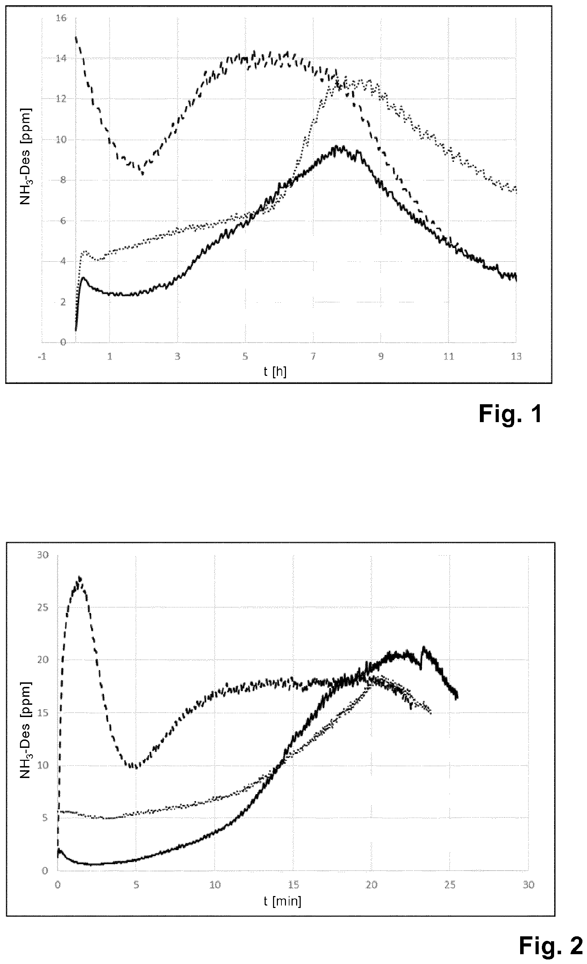

Das imprägnierte Filtermaterial mit der Korngösse von 14x30 mesh size wird in ein Prüfrohr mit einem 60 mm Durchmesser mittels snow-storm-filling eingefüllt. Die Prüfschichthöhe beträgt 152 ± 1 mm. Dann werden die Proben mit einem Prüfluftstrom von 14.4 ± 0.5L/min (Kontaktzeit 0.424s) durchströmt. Die Prüfluftfeuchte beträgt 90 -0/+5% und die Prüflufttemperatur beträgt 20 ± 5°C. Die nach dem Prüfrohr austretende Luft wir auf Ammoniak geprüft. Beim ausgewaschenen Ammoniak handelt es sich um den sogenannten Rest-Ammoniak, der während dem Trocknungsprozess nicht vollständig aus der Aktivkohle ausgetrieben wurde. Es wird solange geprüft bis das Maximum der NH3-Desorption erreicht bzw. überschritten wird. Die entsprechenden Testergebnisse sind in Figur 1 gezeigt. Dabei sind die Daten für PL MC C_CBRN als durchgezogene Linie, für PL MC C als gestrichelte Linie und für PLW K als gepunktete Linie dargestellt. Aus Figur 1 wird ersichtlich, dass PL MC C_CBRN die geringste Ammoniak-Desorption (NH3-Des) aufweist.

### Prüfbedingungen für 7x16 mesh size:

Das imprägnierte Filtermaterial mit der Korngösse von 7x16 mesh size wird in ein Prüfrohr mit einem 60 mm Durchmesser mittels snow-storm-filling eingefüllt. Die Prüfschichthöhe beträgt 152 ± 1mm. Dann werden die Proben mit einem Prüfluftstrom von 16.3 ± 0.5L/min (Kontaktzeit 1.58s) durchströmt. Die Prüfluftfeuchte beträgt 90 % -0/+5% und die Prüflufttemperatur beträgt 20 ± 2°C. Die nach dem Prüfrohr ausgetretene Luft wird auf Ammoniak (NH3) geprüft. Der Ammoniak, der bei dieser Prüfung aus der Aktivkohle gewaschen wird, liegt nach der Herstellung der Aktivkohle gebunden vor. Es wird solange geprüft bis das Maximum der NH3-Desorption erreicht bzw. überschritten wird. Die entsprechenden Testergebnisse sind in Figur 2 gezeigt. Dabei sind die Daten für PL MC C_CBRN als durchgezogene Linie, für PL MC C als gestrichelte Linie und für PLW K als gepunktete Linie dargestellt. Aus Figur 2 wird ersichtlich, dass PL MC C_CBRN eine ähnlich grosse bzw. starke Ammoniak-Desorption (NH3-Des) aufweist wie PLW K und PL MC C.

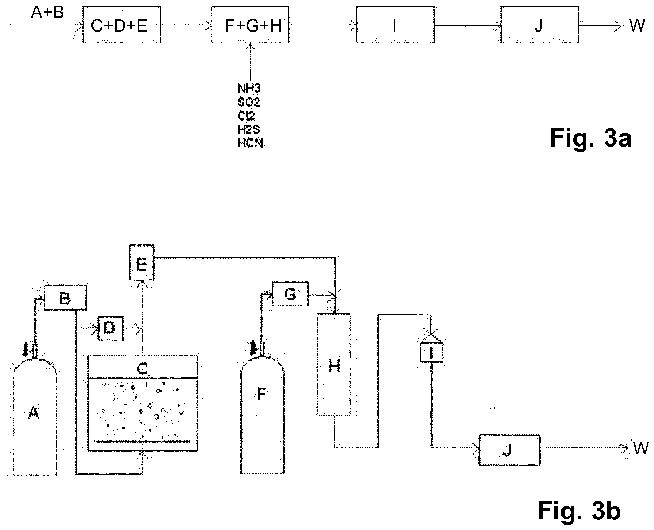

Die Figuren 3a und 3b zeigen eine Prüfapparatur für das Prüfen von imprägniertem Filtermaterial, wie zuvor beschrieben. Figur 3a zeigt dabei ein Fliessbild und Figur 3b den schematischen Aufbau. Beim Prüfen wird komprimierte, trockene Luft (A) mit einem Mass-flow-controller (B) zur Einstellung des Prüfvolumenstroms geregelt.

Diese wird durch ein temperierbares Wasserbad (C) zur Aufbereitung der rel. Feuchte geleitet, ein Kontroller (D) ist zur Einstellung der gewünschten rel. Feuchte eingerichtet. Ein Messgerät (E) dient zur Bestimmung der rel. Feuchte. Eine Gasflasche (F) mit dem zu prüfenden Agens (Bsp. NH3, PH3, NO2 oder CL2) wird mit einem Mass-flow-controller (G) zur Einstellung der gewünschten Zielkonzentration verbunden. Eine Mischkammer (H) ist vorgesehen, um das Agens mit der aufbereiteten Luft zu mischen. Im Prüfrohr (I) wird das zu prüfende Filtermaterial angeordnet und ein Gasdetektor (J) dient dazu den Gasdurchbruch zu messen.

## Patentansprüche

1. Verfahren zur Herstellung eines imprägnierten Filtermaterials wobei das Verfahren die folgenden Schritte aufweist:
- Bereitstellen mindestens einer Imprägnierlösung, wobei die Imprägnierlösung oder die Imprägnierlösungen im Fall mehrere Imprägnierschritte mindestens Phosphat, Sulfat, Molybdän, Zink und Kupfer aufweisen;
- Bereitstellen eines Filtermaterials, wobei das Filtermaterial Aktivkohle ist und
- mindestens einmalige Imprägnierung des Filtermaterials mit der mindestens einen Imprägnierlösung.

2. Verfahren gemäss Anspruch 1, wobei die Imprägnierlösung eine wässrige Lösung ist.

3. Verfahren gemäss einem der vorherigen Ansprüche, wobei das Verfahren den folgenden Schritt aufweist:
- Trocknen des Filtermaterials nach einer Imprägnierung.

4. Verfahren gemäss einem der vorherigen Ansprüche, wobei mindestens eine Impägnierlösung mindestens eine der folgenden Imprägnierchemikalien aufweist: Schwefelsäure, Phosphorsäure.

5. Verfahren gemäss einem der vorherigen Ansprüche, wobei mindestens eine Impägnierlösung mindestens drei der folgenden Imprägnierchemikalien: Wasser, Ammoniak, Nitrat, insbesondere Silbernitrat, Kupfersalz, insbesondere Kupfercarbonat, Ammoniumcarbonat, Molybdänsalz, insbesondere Ammoniumheptamolybdat, Halogenat, insbesondere Jodat, insbesondere Kaliumiodat, Zinksalz, insbesondere Zinkhydroxid, Sulfat, insbesondere Ammoniumsulfat, Phosphat, insbesondere Ammoniumphosphat und/oder Triethylendiamin (TEDA) aufweist.

6. Verfahren gemäss einem der vorherigen Ansprüche, wobei das Verfahren den folgenden Schritt aufweist:
- Bereitstellen einer Zinkchloridlösung, insbesondere einer wässrigen Zinkchloridlösung;
- imprägnieren des Fitermaterials mit der Zinkchloridlösung.

7. Imprägniertes Filtermaterial für die Entfernung von Schad- und/oder Giftstoffen aus Atemluft, wobei das imprägnierte Filtermaterial Aktivkohle ist und mindestens Sulfat, Phosphat, Molybdän, Kupfer und Zink aufweist, wobei diese Komponenten durch die Imprägnierung in das Filtermaterial eingebracht wurden.

8. Filtermaterial gemäss Anspruch 7, wobei das Filtermaterial Zinksulfat, Zinkphosphat, Molybdat und/oder Zinkkarbonat, insbesondere 1-25 Gew.% Zinksulfat, insbesondere 1-15 Gew.% Zinksulfat, insbesondere 0.5-3.5 Gew.% Zinkphosphat, insbesondere 0.5-5 Gew.% Ammoniumheptamolybdat und/oder insbesondere 1-15 Gew.% Zinkkarbonat, aufweist.

9. Filtermaterial gemäss einem der Ansprüche 7 oder 8 wobei das Filtermaterial Silber, Triethylendiamin (TEDA), Halogenat und/oder Kupfer, insbesondere 0.02-0.1 Gew.% Silberoxid, insbesondere 0.1-2 Gew.% TEDA, insbesondere Iodat, insbesondere 0.5-4 Gew.% Kaliumiodat, insbesondere 0.5-2 Gew.% Kaliumiodat, und/oder insbesondere 0.5-10 Gew.% Kupferoxid, insbesondere 0.5-6 Gew.% Kupferoxid, aufweist.

10. Filter zur Entfernen von Schad- und/oder Giftstoffen aus Atemluft, ausweisend ein Filtermaterial gemäss einem der Ansprüche 7 - 9.

11. Atemschutzmaske und/oder Atemluftschutzeinrichtung aufweisend einen Filter gemäss Anspruch 10.

## Claims

1. A method for manufacturing an impregnated filter material, wherein the method comprises the following steps:
- providing at least one impregnating solution, wherein the impregnating solution or the impregnating solutions in case of two or more impregnating steps comprises phosphate, sulphate, molybdenum, zinc and copper;
- providing a filter material, wherein the filter material is activated carbon; and
- impregnating the filter material with at least one impregnating solution, at least once.

2. A method according to claim 1, wherein the impregnating solution is an aqueous solution.

3. A method according to one of the preceding claims, wherein the method comprises the following step:
- drying the filter material after an impregnation.

4. A method according to one of the preceding claims, wherein at least one impregnating solution comprises at least one of the following impregnating chemicals: sulphuric acid, phosphoric acid.

5. A method according to one of the preceding claims, wherein at least one impregnating solution comprises at least three of the following impregnating chemicals: water, ammonia, nitrate, in particular silver nitrate, copper salt, in particular copper carbonate, ammonium carbonate, molybdenum salt, in particular ammonium heptamolybdate, halogenate, in particular iodate, in particular potassium iodate, zinc salt, in particular zinc hydroxide, sulphate, in particular ammonium sulphate, phosphate, in particular ammonium phosphate, and/or triethylene diamine (TEDA).

6. A method according to one of the preceding claims, wherein the method comprises the following steps:
- providing a zinc chloride solution, in particular an aqueous zinc chloride solution;
- impregnating the filter material with the zinc chloride solution.

7. An impregnated filter material for the removal of noxious substances and/or toxins out of respiratory air, wherein the impregnated filter material is activated carbon and comprises at least sulphate and phosphate, molybdenum, copper and zinc wherein these components are introduced into the filter material by impregnation.

8. A filter material according to claim 7, wherein the filter material comprises zinc sulphate, zinc phosphate, molybdate and/or zinc carbonate, in particular 1-25% by weight of zinc sulphate, in particular 1-15% by weight of zinc sulphate, in particular 0.5-3.5% by weight of zinc phosphate, in particular 0.5-5% by weight of ammonium heptamolybdate and/or in particular 1-15% by weight of zinc carbonate.

9. A filter material according to one of the claims 7 or 8, wherein the filter material comprises silver, triethylene diamine (TEDA), halogenate and/or copper, in particular 0.02-0.1% by weight of silver oxide, in particular 0.1-2% by weight of TEDA, in particular iodate, in particular 0.5-4% by weight of potassium iodate, in particular 0.5-2% by weight of potassium iodate, and/or in particular 0.5-10% by weight of copper oxide, in particular 0.5-6% by weight of copper oxide.

10. A filter for removing noxious substances and/or toxins from respiratory air, comprising a filter material according to one of the claims 7 - 9.

11. A respiratory protective mask and/or respiratory air protective device comprising a filter according to claim 10.

## Revendications

1. Procédé de fabrication d'un matériau de filtre imprégné, le procédé présentant les étapes suivantes :
préparation d'au moins une solution d'imprégnation, la solution d'imprégnation, ou les solutions d'imprégnation au cas où plusieurs étapes d'imprégnation sont prévues, présentant au moins du phosphate, du sulfate, du molybdène, du zinc et du cuivre,
préparation d'un matériau de filtre, le matériau de filtre étant un charbon actif et
imprégnation au moins une fois du matériau de filtre par la ou les solutions d'imprégnation.

2. Procédé selon la revendication 1, dans lequel la solution d'imprégnation est une solution aqueuse.

3. Procédé selon l'une des revendications précédentes, le procédé présentant l'étape suivante :
séchage du matériau de filtre après une imprégnation.

4. Procédé selon l'une des revendications précédentes, dans lequel au moins une solution d'imprégnation présente au moins l'un des produits chimiques d'imprégnation suivants : acide sulfurique, acide phosphorique.

5. Procédé selon l'une des revendications précédentes, dans lequel au moins une solution d'imprégnation présente au moins trois des produits chimiques d'imprégnation suivants : eau, ammoniac, nitrate, en particulier nitrate d'argent, sel de cuivre, en particulier carbonate de cuivre, carbonate d'ammonium, sel de molybdène, en particulier heptamolybdate d'ammonium, halogénate, en particulier iodate, en particulier iodate de potassium, sel de zinc, en particulier hydroxyde de zinc, sulfate, en particulier sulfate d'ammonium, phosphate, en particulier phosphate d'ammonium, et/ou triéthylène diamine (TEDA).

6. Procédé selon l'une des revendications précédentes, le procédé présentant les étapes suivantes :
préparation d'une solution de chlorate de zinc et en particulier d'une solution aqueuse de chlorate de zinc et
imprégnation du matériau de filtre par la solution de chlorate de zinc.

7. Matériau de filtre imprégné servant à éliminer des substances nocives et/ou toxiques présentes dans l'air respiré, le matériau de filtre imprégné étant un charbon actif et présentant au moins du sulfate, du phosphate, du molybdène, du cuivre et du zinc, ces composants étant apportés dans le matériau de filtre par l'imprégnation.

8. Matériau de filtre selon la revendication 7, le matériau de filtre contenant du sulfate de zinc, du phosphate de zinc, du molybdate et/ou du carbonate de zinc, en particulier de 1 à 25 % en poids de sulfate de zinc, en particulier de 1 à 15 % en poids de sulfate de zinc et en particulier de 0,5 à 3,5 % en poids de phosphate de zinc, en particulier 0,5 à 5 % en poids d'heptamolybdate d'ammonium et/ou en particulier de 1 à 15 % en poids de carbonate de zinc.

9. Matériau de filtre selon l'une des revendications 7 ou 8, le matériau de filtre contenant de l'argent, de la triéthylène diamine (TEDA), de l'halogénate et/ou du cuivre, en particulier de 0,02 à 0,1 % en poids d'oxyde d'argent, en particulier de 0,1 à 2 % en poids de TEDA, en particulier de l'iodate, en particulier de 0,5 à 4 % en poids d'iodate de potassium, en particulier de 0,5 à 2 % en poids d'iodate de potassium et/ou en particulier de 0,5 à 10 % en poids d'oxyde de cuivre, et en particulier de 0,5 à 6 % en poids d'oxyde de cuivre.

10. Filtre destiné à éliminer des substances nocives et/ou toxiques dans l'air respiré, le filtre présentant un matériau de filtre selon l'une des revendications 7 à 9.

11. Masque de protection respiratoire et/ou dispositif de protection de l'air respiré présentant un filtre selon la revendication 10.
